# EUROPÄISCHE PATENTSCHRIFT

(11) **EP 2 697 336 B1**
(45) Veröffentlichungstag und Bekanntmachung des Hinweises auf die Patenterteilung: **01.06.2016**
(21) Anmeldenummer: 12704759.5
(22) Anmeldetag: 10.02.2012
(51) Int. Cl.: C09K 11/06, G02B 27/01, B32B 17/06

(54) **VERFAHREN ZUR HERSTELLUNG EINER FOLIE MIT LUMINESZIERENDEN PARTIKELN**
PROCESS FOR THE MANUFACTURE OF A FILM WITH LUMINOUS PARTICLES
PROCÉDÉ DE FABRICATION D'UNE FEUILLE DOTÉE DE PARTICULES LUMINESCENTES

(30) Priorität: 15.04.2011 EP 11162567
(43) Veröffentlichungstag der Anmeldung: 19.02.2014
(73) Patentinhaber: Saint-Gobain Glass France, 92400 Courbevoie (FR)
(72) Erfinder: LABROT, Michael, 52072 Aachen (DE); ELMER, Monique, 48282 Emsdetten (DE); SABLAYROLLES, Jean, F-60530 Crouy en Thelle (FR); CLABAU, Frédéric, F-75013 Paris (FR)
(74) Vertreter: Gebauer, Dieter Edmund
(86) Internationale Anmeldenummer: PCT/EP2012/052338
(87) Internationale Veröffentlichungsnummer: WO 2012/139788

(56) Entgegenhaltungen:
- WO-A1-01/94496
- WO-A1-2010/139889
- DE-A1- 4 024 330
- DE-A1-102009 044 181

## Beschreibung

Die Erfindung betrifft ein Verfahren zur Herstellung einer Folie mit lumineszierenden Partikeln.

Head-Up-Displays (HUD) sind in der Luftfahrt weit verbreitet. Die im direkten Sichtfeld der Piloten montierten Systeme zeigen die wichtigsten Informationen des eigenen und der fremden Flugzeuge an. Diese im militärischen Bereich etablierten und vielgenutzten Systeme haben auch im zivilen Bereich, insbesondere im Automobilbereich, viele Anwendungsmöglichkeiten. So können Daten zur Geschwindigkeit, der Abstand zum vorausfahrenden Fahrzeug oder Richtungsangaben des Navigationsgerätes im Gegensatz zu Head-Down-Displays (HDD) direkt auf Augenhöhe des Fahrers angezeigt werden. Diese Möglichkeiten verbessern deutlich die Verkehrssicherheit des Fahrzeuges, da der Fahrer beim Blick auf die Instrumente die Verkehrslage und -situation nicht beobachten kann. Bei erhöhten Geschwindigkeiten des Fahrzeugs, beispielsweise auf der Autobahn, kann der "blind" zurückgelegte Fahrzeugweg beträchtlich sein und eine erhöhte Unfallgefahr bedingen.

Werden Head-Up-Displays (HUD) von einer externen Lichtquelle, wie beispielsweise von einem Laser beleuchtet, so sind die Leuchtfelder in Abhängigkeit von den herrschenden Licht- und Witterungsverhältnissen nur schwer zu erkennen. Starkes Sonnenlicht und Lichtreflexion durch Wassertropfen oder Schmutzteilchen erschweren deutlich das Erkennen der im Head-Up-Display projizierten Informationen. Dies macht sich besonders deutlich bei virtuellen Bildern bemerkbar, welche auf die Bildfläche, beispielsweise die Frontscheibe, projiziert werden. Nachteile dieser klassischen HUDs sind zudem das begrenzte Sichtfeld zum Darstellen der projizierten Informationen. Ein möglicher Lösungsansatz sind reale, auf der Bildfläche über elektromagnetisch angeregte Farbstoffe oder Pigmente erzeugte Bilder. Hierbei kann prinzipiell die gesamte Scheibe als Informationsträger genutzt werden.

Aufgrund der Größe der Scheibe und der Tendenz der Pigmente, sich in der Klebeschicht gleichmäßig zu verteilen, sind relativ hohe Konzentrationen der farbgebenden Pigmente erforderlich. Hohe Pigmentkonzentrationen sind jedoch in vielen Fällen sehr teuer und erfordern unter Umständen besondere Vorsichtsmaßnahmen im Hinblick auf die gefahrstoffrechtliche Einstufung und Behandlung der Pigmente oder Farbstoffe. Die hohen Pigmentkonzentrationen erfordern gleichzeitig einen hohen Einsatz von Lösungsmitteln. Diese in vielen Fällen leicht flüchtigen organischen Verbindungen (VOC) stellen eine stetige Gefahr für Umwelt und Gesundheit dar. Insbesondere bei dauerhafter Exposition sind Schädigungen der Gesundheit möglich. Auch können die Lösungsmittel in vielen Fällen nicht wiederverwendet werden und stellen so einen wesentlichen Kostenfaktor bei der Herstellung von HUDs dar.

DE 603 14 613 T2 offenbart eine photochrome Zusammensetzung und ein Verfahren zu ihrer Herstellung. Die Zusammensetzung enthält ein lineares, vernetzbares Polyurethan oder Polyurethan-Harnstoff-Polymer und eine photochrome organische Verbindung.

WO 2004/099172 A1 offenbart eine photochrome Zusammensetzung auf benzol-, naphthen- und phenathrochromer Struktur, substituiert mit einer Arylamingruppe.

US 7,230,767 B2 offenbart ein Bildschirmsystem in einer Fahrzeugscheibe. Die Anordnung enthält lumineszierende Verbindungen auf der nach außen gerichteten Seite der Innenscheibe. Über eine Leuchtquelle werden die lumineszierenden Verbindungen angeleuchtet und erscheinen im Blickfeld eines Autofahrers.

DE 100 02 152 A1 offenbart eine transparent eingefärbte und UV-Licht absorbierende Folie. Die Folie wird über Extrusionsverfahren hergestellt, bei dem ein Thermoplast und ein in der Folie lösbarer Farbstoff gemischt und anschließend gemeinsam extrudiert werden.

Die deutsche Patentanmeldung DE 10 2009 044181 A1 und die internationale Patentanmeldung WO 2010/139889 A1 offenbaren eine Folie mit einem lumineszierenden Pigment.

Die deutsche Patentanmeldung DE 40 24330 A1 zeigt die Extrusion einer photochromen Substanz mit einer Matrix.

Die Aufgabe der Erfindung liegt darin, ein Verfahren zur Herstellung einer PVB-Folie für Head-Up-Displays bereitzustellen, welches den Einsatz leicht-flüchtiger organischer Lösungsmittel reduziert oder vermeidet.

Die Aufgabe der vorliegenden Erfindung wird erfindungsgemäß durch ein Verfahren gemäß dem unabhängigen Anspruch 1 gelöst. Bevorzugte Ausführungen gehen aus den Unteransprüchen hervor.

Das erfindungsgemäße Verfahren umfasst in einem ersten Schritt das Mischen eines Thermoplast-(Granulats) mit einem lumineszierenden Pigment. Das Thermoplast-Granulat enthält bevorzugt PVB (Polyvinylbutyral) oder EVA (Poly-Ethylvinylacetat). Optional können auch Polybutylenterephthalat (PBT), Polycarbonat (PC), Polyethylenterephthalat (PET) und Polyethylennaphthalat (PEN), Polyvinylchlorid (PVC), Polyvinylfluorid (PVF), Polyvinylbutyral (PVB) ohne Weichmacher und/oder Copolymere davon, besonders bevorzugt Polyethylenterephthalat (PET) enthalten sein. Das lumineszierende Pigment enthält ein Hydroxyalkylterephthalat mit der Formel: R₁-COO-P(QH)x(1-4)-COO-R₂, wobei R₁ und R₂ ein Alkyl-, Aryl oder Allylrest mit 1 bis 10 C Atomen sein kann, P ein Phenylring, OH am Phenylring gebundene Hydroxylgruppen und x die Anzahl der am Phenylring gebundenen Hydroxylgruppen. Das Hydroxyalkylterephthalat hat bevorzugt die Formel: R₁-COO-P(OH)x(2-4)-COO-R₂. Die allgemeine Strukturformel ist:

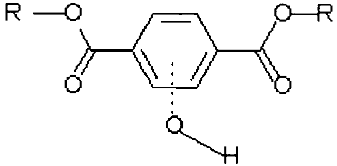

Das lumineszierende Pigment enthält bevorzugt Diethyl-2,5-dihydroxyterephtalat. Die Strukturformel ist

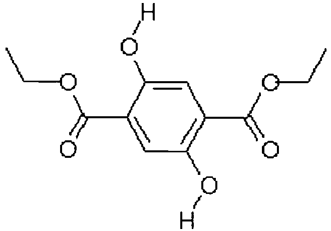

Das verwendete lumineszierende Pigment weist ein lokales Anregungsmaximum im Bereich von 350 nm bis 450 nm und ein lokales Emissionsmaximum im Bereich von 400 nm bis 800 nm auf. Der Ausdruck "lokal" beschreibt im Sinne der Erfindung bevorzugt einen Bereich mit der Breite von 50 nm. Die lumineszierenden Pigmente enthalten im Sinne der Erfindung organische und/oder anorganische lumineszierende Verbindungen, Ionen, Aggregate und/oder Moleküle. Lumineszenz beinhaltet Fluoreszenz und/oder Phosphoreszenzprozesse, die Anregung mit elektromagnetischer Strahlung und die Emission elektromagnetischer Strahlung. Die emittierte Strahlung weist bevorzugt eine andere Wellenlänge als die anregende Strahlung auf. Die emittierte Strahlung weist bevorzugt eine höhere Wellenlänge auf.

Die erhaltene Thermoplast-Mischung wird anschließend in einen Extruder gefüllt. Die Thermoplast-Mischung wird im nächsten Schritt in dem Extruder bei 150 °C bis 200 °C homogenisiert und anschließend wird eine Thermoplast-Folie erhalten. Das lumineszierende Pigment ist überraschenderweise im erfindungsgemäßen Verfahren temperaturstabil und übersteht insbesondere den Extrusionsschritt. In einem abschließenden Schritt wird die Thermoplast-Folie abgekühlt. Dies kann beispielsweise über die Luft oder durch Abschrecken mit Wasser erfolgen.

Die erhaltene Thermoplast-Folie weist bevorzugt eine Lichttransmission von > 70 %, besonders bevorzugt > 82 % gemessen bei einer Wellenlänge von 405 nm auf. Die Lichttransmission der Thermoplast-Folie kann über Foliendicke, Polymerzusammensetzung, Polymerisierungsgrad, Polymerisierungsverteilung, UV-Blocker oder Weichmacher eingestellt werden.

Die Thermoplast-Folie enthält bevorzugt 0,1 g/m² bis 15g/m² lumineszierendes Pigment. Die Mengenangaben beziehen sich auf eine Dicke der Thermoplast-Folie von etwa 0,76 mm.

Das im Verfahren verwendete lumineszierende Pigment weist bevorzugt ein Anregungsmaximum im Bereich von 380 nm bis 420 nm und/oder ein Emissionsmaximum im Bereich von 400 nm bis 800 nm, bevorzugt 430 nm bis 500 nm auf. Das lumineszierende Pigment ist überraschenderweise im erfindungsgemäßen Verfahren temperaturstabil und übersteht insbesondere den Extrusionsschritt. Dieses wurde durch Alterungstests an extrudierten Thermoplast-Folien bestätigt.

Das lumineszierende Pigment enthält bevorzugt Benzopyrane, Naphthopyrane, 2H-Naphthopyrane, 3H-Naphthopyrane, 2H-Phenanthropyrane, 3H-Phenanthropyrane, Photochrome Harze, Cumarine, Xanthine, Naphathalsäurederivate, Oxazole, Stilbene, Styryle, Perylene, Lanthanoide, bevorzugt Y₂O₃:Eu, YVO₄:Tm, Y₂O₂S:Pr, Gd₂O₂S:Tb und/oder Gemische davon.

Erfindungsgemäß wird der Extruder im Extrudereingang auf eine mittlere Temperatur von 135 °C bis 150 °C erwärmt. Der Ausdruck "Extrudereingang" bezieht sich im Sinne der Erfindung auf den Bereich der Materialzuführung, d.h. die ersten 20 % der Extruderschneckenlänge.

Erfindungsgemäß wird der Extruder in der Extrudermitte auf eine mittlere Temperatur von 150 °C bis 170 °C erwärmt. Der Ausdruck "Extrudermitte" bezieht sich im Sinne der Erfindung auf die mittleren 60 % der Extruderschneckenlänge.

Erfindungsgemäß wird der Extruder im Extruderausgang auf eine mittlere Temperatur von 160 °C bis 180 °C erwärmt. Der Ausdruck "Extruderausgang" bezieht sich im Sinne der Erfindung auf die letzten 20 % der Extruderschneckenlänge hin zum Ausgang.

Die Thermoplast-Folie wird bevorzugt über eine einzelne Extruderschnecke im Extruder gefördert.

Die Thermoplast-Folie wird bevorzugt mit einer Extrusionsgeschwindigkeit von 10 mm/s bis 20 mm/s gefördert.

Die Thermoplast-Folie wird bevorzugt in einem Durchmesser von 0,3 mm bis 1 mm gefördert.

Die Thermoplast-Mischung enthält bevorzugt 0,5 g bis 8 g lumineszierendes Pigment pro kg Thermoplast, besonders bevorzugt 2 g bis 5 g lumineszierendes Pigment pro kg Thermoplast.

Die Thermoplast-Mischung enthält bevorzugt Antioxidationsmittel.

Eine Thermoplast-Folie, hergestellt nach dem erfindungsgemäßen Verfahren, weist bevorzugt keine Lösungsmittelrückstände auf, da die lumineszierenden Pigmente ohne Lösungsmittel beigemischt werden.

Gezeigt ist weiterhin eine Verbundglasscheibe mit einer Thermoplastfolie in der Zwischenschicht zwischen den einzelnen Scheiben der Verbundglasscheibe. Die Thermoplastfolie kann Teil der Zwischenschicht sein oder alleine die Zwischenschicht bilden.

Gezeigt ist des Weiteren eine Vorrichtung zum Anzeigen eines Piktogramms, Schriftzeichen und/oder Zahlen. Die Vorrichtung umfasst eine Verbundglasscheibe und eine zwischen der Verbundglasscheibe angeordnete Thermoplast-Folie. Eine auf die Verbundglasscheibe gerichtete Leuchtquelle emittiert elektromagnetische Strahlung auf die Verbundglasscheibe. Die von der Leuchtquelle emittierte Strahlung wird von den lumineszierenden Pigmenten in der Klebeschicht absorbiert und mit veränderter Wellenlänge wieder emittiert. Diese emittierte Strahlung wird vom Betrachter als Bildpunkt auf der Scheibe wahrgenommen. Die Leuchtquelle umfasst bevorzugt einen Diodenlaser oder Laserscanner. Die einzelnen Scheiben der Verbundglasscheibe weisen bevorzugt eine Dicke von 1 mm bis 8 mm, besonders bevorzugt 1,4 mm bis 2,5 mm auf.

Gezeigt ist außerdem die Verwendung der Thermoplast-Folie in Head-Up-Displays in Gebäuden, Fahrzeugen, Flugzeugen und/oder Hubschraubern, bevorzugt in Head-Up-Displays von Windschutzscheiben in Fahrzeugen oder Werbetafeln.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein.

Es zeigen:
Figur 1 einen Querschnitt der Vorrichtung,
Figur 2 einen Querschnitt des im erfindungsgemäßen Verfahren verwendeten Extruders und
Figur 3 ein Fließdiagramm des erfindungsgemäßen Verfahrens.

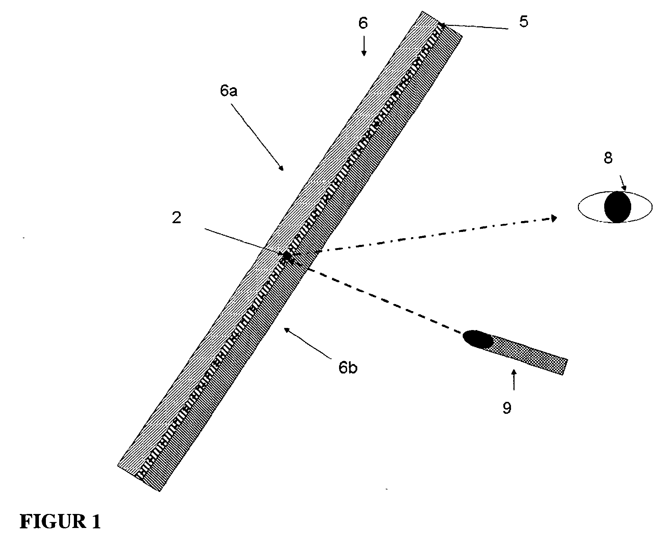

Figur 1 zeigt einen Querschnitt der Vorrichtung. Die Verbundglasscheibe 6 aus innerer Scheibe 6c, Zwischenschicht (Thermoplastfolie) 6b und äußerer Scheibe 6a wird von einer Leuchtquelle 9, bevorzugt einem Diodenlaser, angestrahlt. Die in der Zwischenschicht 6 befindlichen lumineszierenden Pigmente 2 emittieren Licht, welches vom Betrachter 8 als Signal oder Piktogramm wahrgenommen wird.

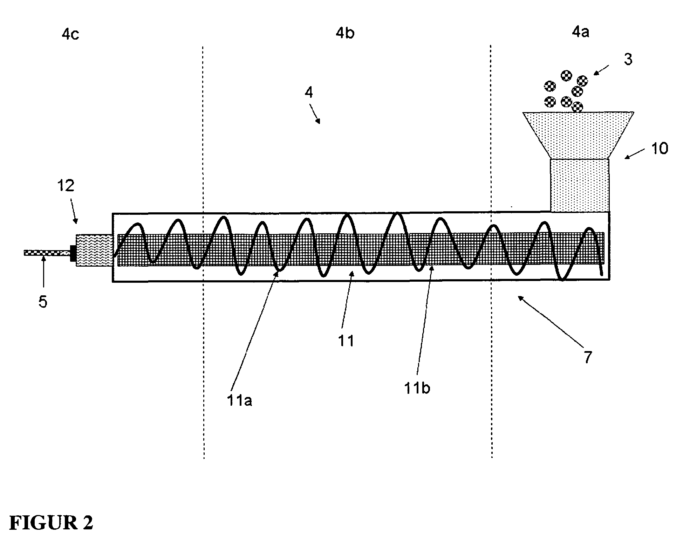

Figur 2 zeigt einen Querschnitt des im erfindungsgemäßen Verfahren verwendeten Extruders 4, welcher die oben beschriebenen Bereiche Extrudereingang 4a, Extrudermitte 4b und Extruderausgang 4c umfasst. Der Extruder 4 weist vom Extrudereingang 4a zum Extruderausgang 4c einen Temperaturgradienten von 130 °C bis 190 °C, bevorzugt von 140 °C bis 170°C, auf. Die im Extrudergehäuse 7 angebrachte Extruderschnecke 11 umfasst ein Schneckengewinde 11a und eine Schneckenwelle 11b. Die Thermoplast-Mischung 3 aus einem Thermoplast-Granulat 1 und einem lumineszierenden Pigment 2 mit einem lokalen Anregungsmaximum im Bereich von 350 nm bis 450 nm und einem lokalen Emissionsmaximum im Bereich von 400 nm bis 800 nm gelangt über die Extruderzufuhr 10 in den Extruder 6. Über die Extruderdüse 12 wird die im Extruder 4 geschmolzene und homogenisierte Thermoplast-Mischung 3 als Thermoplast-Folie 5 mit einer bevorzugten Geschwindigkeit von 14 mm/s gefördert.

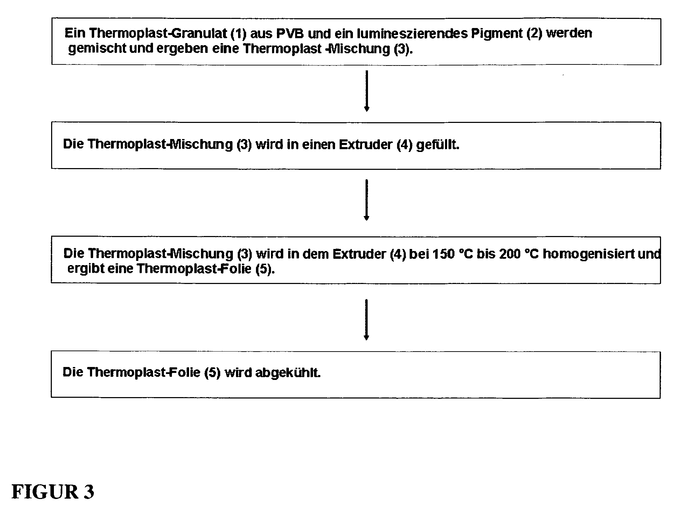

Figur 3 zeigt ein Fließdiagramm des erfindungsgemäßen Verfahrens. In einem ersten Schritt erfolgt das Mischen eines Thermoplast-Granulats 1 mit einem lumineszierenden Pigment 2. Das Thermoplast-Granulat enthält bevorzugt PVB (Polyvinylbutyral) Das verwendete lumineszierende Pigment 2 weist ein lokales Anregungsmaximum im Bereich von 350 nm bis 450 nm und ein lokales Emissionsmaximum im Bereich von 400 nm bis 800 nm auf. Die erhaltene Thermoplast-Mischung 3 wird anschließend in einen Extruder 4 gefällt. Die Thermoplast-Mischung 3 wird im nächsten Schritt in dem Extruder 4 bei 150 °C bis 200 °C homogenisiert und anschließend wird eine Thermoplast-Folie 5 erhalten. In einem abschließenden Schritt wird die Thermoplast-Folie 5 abgekühlt. Dies kann beispielsweise über die Luft oder durch Abschrecken mit Wasser erfolgen.

Mit dem erfindungsgemäßen Verfahren wird eine Thermoplast-Folie 5 erhalten, die im Vergleich zu bekannten Folien keine Lösungsmittelrückstände aufweist, da die Herstellung ohne Lösungsmittel erfolgt.

### Bezugszeichenliste:

- 1: Thermoplast / Thermoplast-Granulat
- 2: lumineszierendes Pigment
- 3: Thermoplast-Mischung
- 4: Extruder
- 4a: Extrudereingang
- 4b: Extrudermitte
- 4c: Extruderausgang
- 5: Thermoplast-Folie
- 6: Verbundglasscheibe
- 6a: äußere Scheibe
- 6b: innere Scheibe
- 7: Extrudergehäuse
- 8: Betrachter
- 9: Leuchtquelle
- 10: Extruderzufuhr
- 11: Extruderschnecke 11a Schneckengewinde
- 12a: Schneckenwelle
- 12: Extruderdüse

## Patentansprüche

1. Verfahren zur Herstellung einer Folie mit lumineszierenden Partikeln, wobei
a. ein Thermoplast (1) und ein lumineszierendes Pigment (2) enthaltend ein Hydroxyalkylterephthalat mit der Formel: R₁-COO-P(OH)x-COO-R₂, wobei R₁, R₂ ein Alkyl-, Aryl- oder Allylrest mit 1 bis 10C Atomen ist, P ein Phenylring, OH am Phenylring gebundene Hydroxylgruppen und x eine ganze Zahl von 1 bis 4 ist, gemischt werden und eine Thermoplast-Mischung (3) erhalten wird und
b. die Thermoplast-Mischung (3) in einem Extruder (4) bei 150 °C bis 200 °C homogenisiert wird und über eine Extrusionsdüse (12) des Extruders (4) eine Thermoplast-Folie (5) erhalten wird, wobei der Extruder (4) im Extrudereingang (4a) auf eine Temperatur von 135 °C bis 150 °C, in der Extrudermitte (4b) auf eine Temperatur von 150 °C bis 170 °C und im Extruderausgang (4c) auf eine Temperatur von 160 °C bis 180 °C erwärmt wird.

2. Verfahren nach Anspruch 1, wobei das lumineszierende Pigment (2) Diethyl-2,5-dihydroxyterephtalat enthält.

3. Verfahren nach Anspruch 1 oder 2, wobei das lumineszierende Pigment (2) ein Anregungsmaximum im Bereich von 380 nm bis 420 nm und/oder ein Emissionsmaximum im Bereich von 430 nm bis 500 nm aufweist.

4. Verfahren nach einem der Ansprüche 1 bis 3, wobei das lumineszierende Pigment (2), Benzopyrane, Naphthopyrane, 2H-Naphthopyrane, 3H-Naphthopyrane, 2H-Phenanthropyrane, 3H-Phenanthropyrane, Photochrome Harze, Cumarine, Xanthine, Naphathalsäurederivate, Oxazole, Stilbene, Styryle, Perylene, Lanthanoide, bevorzugt Y₂O₃:Eu, YVO₄:Tm, Y₂O₂S:Pr, Gd₂O₂S:Tb und/oder Gemische davon enthält.

5. Verfahren nach einem der Ansprüche 1 bis 4, wobei die Thermoplast-Folie (5) über eine einzelne Extruderschnecke (6) im Extruder (4) gefördert wird.

6. Verfahren nach einem der Ansprüche 1 bis 5, wobei die Thermoplast-Folie (5) mit einer Extrusionsgeschwindigkeit von 10 mm/s bis 20 mm/s gefördert wird.

7. Verfahren nach einem der Ansprüche 1 bis 6, wobei die Thermoplast-Folie (5) in einem Durchmesser von 0,3 mm bis 1 mm gefördert wird.

8. Verfahren nach einem der Ansprüche 1 bis 7, wobei die Thermoplast-Mischung (3) 0,5 g bis 8 g lumineszierendes Pigment (2) pro kg Thermoplast (1) enthält.

## Claims

1. Method for producing a film having luminescent particles, wherein
a. a thermoplastic (1) and a luminescent pigment (2) containing a hydroxyalkyl terephthalate of the formula: R₁-COO-P(OH)x-COO-R₂, where R₁, R₂ is an alkyl, aryl, or allyl radical having 1 to 10 C atoms, P is a phenyl ring, OH is hydroxyl groups bound to the phenyl ring, and x is an integer from 1 to 4, are mixed, and a thermoplastic mixture (3) is obtained, and
b. the thermoplastic mixture (3) is homogenized in an extruder (4) at 150 °C to 200 °C, and a thermoplastic film (5) is obtained via an extrusion nozzle (12) of the extruder (4), wherein the extruder (4) is heated in the extruder intake (4a) to a temperature of 135 °C to 150 °C, in the extruder middle (4b) to a temperature of 150 °C to 170 °C and in the extruder discharge (4c) to a temperature of 160 °C to 180 °C.

2. Method according to claim 1, wherein the luminescent pigment (2) contains diethyl 2,5-dihydroxyterephtalate.

3. Method according to claim 1 or 2, wherein the luminescent pigment (2) has an excitation maximum in the range from 380 nm to 420 nm and/or an emission maximum in the range from 430 nm to 500 nm.

4. Method according to one of claims 1 through 3, wherein the luminescent pigment (2) contains benzopyranes, naphthopyranes, 2H-naphthopyranes, 3H-naphthopyranes, 2H-phenanthropyranes, 3H-phenanthropyranes, photochromic resins, coumarins, xanthines, naphthalinic acid derivatives, oxazoles, stilbenes, styryls, perylenes, lanthanides, preferably Y₂O₃:Eu, YVO₄:Tm, Y₂O₂S:Pr, Gd₂O₂S:Tb, and/or mixtures thereof.

5. Method according to one of claims 1 through 4, wherein the thermoplastic film (5) is conveyed in the extruder (4) via a single extruder screw (6).

6. Method according to one of claims 1 through 5, wherein the thermoplastic film (5) is conveyed with an extrusion rate of 10 mm/s to 20 mm/s.

7. Method according to one of claims 1 through 6, wherein the thermoplastic film (5) is conveyed in a diameter of 0.3 mm to 1 mm.

8. Method according to one of claims 1 through 10, wherein the thermoplastic mixture (3) contains 0.5 g to 8 g of luminescent pigment (2) per kg of thermoplastic (1).

## Revendications

1. Procédé de fabrication d'un film avec des particules luminescentes, où
a. une matière thermoplastique (1) et un pigment luminescent (2) contenant un téréphtalate d'hydroxyalkyle avec la formule: R₁-COO-P(OH)x-COO-R₂, où R₁, R₂ est un radical alkyle, aryle ou allyle avec de 1 à 10 atomes C, P un noyau phényle, OH des groupes hydroxyles connectées au noyau phényle et x est un numéro entier entrel et 4, sont mélangés et un mélange thermoplastique (3) est obtenu, et
b. le mélange thermoplastique (3) est homogénéisé dans une extrudeuse (4) à 150° C à 200° C et un film thermoplastique (5) est obtenu à travers une filière d'extrusion (12) de l'extrudeuse (4), où l'extrudeuse (4) est chauffée à une température de 135° C à 150° C à l'entrée de l'extrudeuse (4 a), à une température de 150 ° C à 170 ° C au centre de l'extrudeuse (4b), et à une température 160° C à 180° C à la sortie de l'extrudeuse (4c).

2. Procédé selon la revendication 1, où le pigment luminescent (2) contient du diéthyl-2,5-terephthalate d'hydroxyalkyle.

3. Procédé selon la revendication 1 ou 2, où le pigment luminescent (2) présente une excitation maximale de l'ordre de 380 nm à 420 nm et/ou une émission maximale de l'ordre de 430 nm à 500 nm.

4. Procédé selon l'une des revendications de 1 à 3, où le pigment luminescent (2), contient des benzopyranes, des naphthopyranes, des 2H-naphthopyranes, des 3H-naphthopyranes, des 2H-phenanthropyranes, des 3H-phenanthropyranes, des résines photochromiques, des coumarines, des xanthines, des dérivées de l'acide de naphtalène, des oxazoles, des stilbènes, des styry des pérylènes, des lanthanides, de préférence Y₂O₃:Eu, YVO₄:Tm. Y₂O₂S:Pr, Gd₂O₂S:Tb et/ou des mélanges de ceux-ci.

5. Procédé selon l'une des revendications 1 à 4, où la feuille thermoplastique (5) est transportée dans l'extrudeuse (4) par le biais d'une seule vis extrudeuse (6).

6. Procédé selon l'une des revendications 1 à 5, où la feuille thermoplastique (5) est transportée avec une vitesse d'extrusion entre 10 mm/s et 20 mm/s.

7. Procédé selon l'une des revendications 1 à 6, où la feuille thermoplastique (5) est transportée avec un diamètre de 0,3 mm à 1 mm.

8. Procédé selon l'une des revendications 1 à 7 où le mélange thermoplastique (3) contient de 0,5 g à 8 g de pigment luminescent (2) par kg de matière thermoplastique (I).
